(19) Europäisches Patentamt / European Patent Office / Office européen des brevets

(11) **EP 3 479 654 B1**

(12) **EUROPEAN PATENT SPECIFICATION**

(45) Date of publication and mention of the grant of the patent:
**30.09.2020 Bulletin 2020/40**

(21) Application number: **17732376.3**

(22) Date of filing: **20.06.2017**

(51) Int Cl.:
*H05B 45/14* (2020.01)       *H05B 47/175* (2020.01)

(86) International application number:
**PCT/EP2017/064985**

(87) International publication number:
**WO 2018/001782 (04.01.2018 Gazette 2018/01)**

(54) **SMART LIGHT DIMMING**

INTELLIGENTE LICHTDIMMUNG

GRADATION DE LUMIÈRE INTELLIGENTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2016 EP 16177047**

(43) Date of publication of application:
**08.05.2019 Bulletin 2019/19**

(73) Proprietor: **Signify Holding B.V.**
**5656 AE Eindhoven (NL)**

(72) Inventors:
• **VAN DE SLUIS, Bartel, Marinus**
**5656 AE Eindhoven (NL)**
• **DRIESEN, Bas**
**5656 AE Eindhoven (NL)**
• **MEERBEEK, Berent, Willem**
**5656 AE Eindhoven (NL)**

(74) Representative: **Verweij, Petronella Daniëlle**
**Signify Netherlands B.V.**
**Intellectual Property**
**High Tech Campus 7**
**5656 AE Eindhoven (NL)**

(56) References cited:
**WO-A1-2016/019005     US-A1- 2016 113 094**

**Description**

FIELD OF THE INVENTION

The present invention relates to a controller for a lighting system including a plurality of lighting devices.

The present invention further relates to a lighting system including such a controller.

The present invention further relates to a method of controlling a lighting system comprising a plurality of lighting devices.

The present invention further relates to a computer program product for implementing such a method.

BACKGROUND OF THE INVENTION

Nowadays, connected lighting systems exist in which a plurality of lighting devices is connected to a central controller arranged to control the lighting devices. Such connected lighting systems are attractive because the controller is capable of generating different light scenes with the lighting devices, e.g. static or dynamic light scenes, for example to create a certain mood or light effect in a space such as a room in which the lighting system is installed.

Certain light scenes may involve the controller to apply dimming instructions to the lighting devices in order to create the desired light scene. However, in case of many luminaires being present in the lighting system, it may be difficult to achieve the desired light scene, in particular when the desired light scene requires deep dimming levels, i.e. low intensity light scenes.

US 2015/0084545 A1 discloses a lighting control system includes a plurality of luminaires and a control device. The plurality of luminaires illuminates a predetermined space. The control device executes first control for controlling a dimming degree of the luminaire arranged in a peripheral area in the periphery of a center area among the plurality of luminaires to be darker than the luminaire arranged in the center area and lighting the luminaires in the center area and the peripheral area and second control for controlling a dimming degree, according to predetermined conditions, of the luminaire arranged in a wall area, which is a position for illuminating a wall surface, among the plurality of luminaires to be brighter than during the first control. In this manner, a light scene having an aesthetically pleasing gradation may be generated.

US 2014/0015445 A1 relates to a lighting system comprising a plurality of lighting devices divided into groups, wherein for each group a group controller is provided. Each group controller is configured to control the power consumption in the corresponding group. The division of the lighting devices into groups may be performed by considering factors like the functions, characteristics, and/or dimming capabilities of the lighting devices, requirements of users and/or characteristics of environments of the lighting devices. The group controller is configured to reduce the power consumption in the lighting system with regard to a (given) amount of power or load to be reduced in the lighting system. This target power consumption reduction value may be received from a utility or from a facility manager or may be calculated by the power consumption controller based on the price of the electricity usage comparing to a target cost or load limit and/or on the ratio or relationship between the available/generated amount of electricity and the consumed electricity. The minimum power consumption that each corresponding lighting device group can go or by which each corresponding group can be operated at least may correspond to the minimum dimming level of the lighting devices of the group.

WO 2016/019005 A1 discloses a system for setting up light scenes. The system automates the control of variable parameters after defining a set of fixtures and static properties of the fixtures in a given environment and a selected mood. The moods may call for an overall dimness as combined from all fixtures. Thus, any light fixture by each manufacturer may be checked as to what their minimum possible dimming value is and then be adjusted to that as a reference. A user may input the locations of the fixtures to commission the fixtures. The dim level for a specific room in a hotel room for a specific mood may be selected based on, for example, user presence.

SUMMARY OF THE INVENTION

The inventors have realized that existing lighting control systems are incapable of generating a light scene having a dimming level that is lower than the combined minimum dimming levels of the luminaires in the lighting system. Moreover, where the lighting systems comprise different types of luminaires having different dimming capabilities, it may not be straightforward to generate the desired light scene, e.g. because a luminaire in the peripheral area cannot be sufficiently dimmed.

The present invention seeks to provide a controller for a lighting system having lighting devices with different dimming capabilities that can cause the lighting system to generate low dimming levels.

The present invention further seeks to provide a lighting system having lighting devices with different dimming capabilities including such a controller.

The present invention further seeks to provide a method of controlling a lighting system having lighting devices with different dimming capabilities such that the lighting system generates low dimming levels.

The present invention further seeks to provide a computer program product for implementing such a method.

Embodiments of the present invention are based on the concept of 'spatial dimming', i.e. generating a dimmed light scene using only a subset, i.e. not all, of the lighting devices in the lighting system. In this manner, particularly deep dimming levels may be achieved by (spatially) controlling the number of lighting devices in the subset. The lighting devices in the subset may be selected based on their respective dim level capabilities, i.e. how much each lighting device can be dimmed, thereby facilitating increased control over the dim level of a light scene to be created, for instance by selecting only those lighting devices that can achieve a sufficiently high dim level (i.e. a low luminous output) to achieve a particular light scene, e.g. a light scene having a deep dim level.

According to an aspect, there is provided a controller for a lighting system including a plurality of lighting devices having different dim level capabilities, the controller configured to determine the dim level capability for each of said lighting devices; and create a light scene having a defined dim level with the lighting system by controlling a subset of said lighting devices selected from the plurality of lighting devices based of the determined dim level capabilities. Such a controller facilitates the implementation of spatial dimming in such a lighting system, in particular the selection of lighting devices for inclusion into the subset, such that a particular dim level may be achieved with the lighting system that is higher than a dim level achieved by enabling all the lighting devices in the lighting system at their highest possible dim level, i.e. the deepest level of dimming.

For example, the controller may be configured to determine the dim level capability of a lighting device from an identifier of the lighting device or from a dim level capability indicator provided by the lighting device. Alternatively, the controller may be configured to determine the dim level capability for a lighting device from a light intensity measurement of a luminous output of the lighting device at its highest dim level.

In an embodiment, the controller is further configured to determine the dim level capability of a lighting device by adjusting an intrinsic dim level capability of the lighting device based on specified environmental factors causing a discrepancy between the intrinsic dim level capability and a perceived dim level capability. Environmental factors that may influence the perceived dim level capability of a lighting device include a natural light source in the vicinity of the lighting device, a reflective surface in the vicinity of the lighting device, (partial) shading of the lighting device, e.g. by a lamp shade, by an interior element in which the lighting device is integrated such as a cove and so on. By compensating for such environmental factors, the determined dim level capability of a lighting device as used by the controller more closely resembles its perceived dim level capability, thereby improving the accuracy of the generation of the desired light scene.

In a particular advantageous embodiment, the controller is further configured to select said subset of lighting devices based on the respective positions of the lighting devices relative to a location in a space housing the lighting system. In this manner, the controller can ensure that the selected lighting devices are distributed in a particular way through the space in which the lighting system is installed, e.g. to achieve an evenly lit space in accordance with the desired light scene or to achieve a particular region of the space being illuminated in accordance with the desired light scene. For example, the controller may be further configured to select said subset of lighting devices based on the respective positions of the lighting devices in said space such that a homogeneously distributed lumen level is achieved across the room. Alternatively, the location in the space may be a user location, which for example may facilitate the creation of a light scene in which lighting devices furthest away from the user are selected as the lighting devices to be dimmed.

The controller may be configured to select said subset of lighting devices based on at least one of height of the lighting devices in the lighting system relative to a surface on which the light scene is projected; and relative location of the lighting devices in said space. Consequently, the controller may give more weight to lighting devices expected to have a greater contribution to the desired light scene, e.g. lighting devices mounted higher up in a room and/or lighting devices mounted closest to a location of relevance within a room, e.g. the centre of the room or a user location within the room.

In an embodiment, the light scene is a dynamic light scene, and the controller is adapted to order the lighting devices in the subset in a temporal order for creating the dynamic light scene such that the dynamic light scene may be accurately created using spatial dimming techniques, i.e. by enabling the lighting devices in the subset in accordance with the determined temporal order. The dynamic light scene may either be generated by the light controller itself, or may be created based on a user operating an input device such as a rotary dimmer knob or linear dimmer slider or digital versions of such devices which can be operated by a user in a lighting control app on a smart device.

The controller may be further configured to determine a spatial distribution of the lighting devices in the lighting system relative to the magnetic north or the North Pole, and to select the lighting devices in said subset based on the determined spatial distribution. In this embodiment, the controller for example may create a light scene associated with a typical cardinal direction of a compass, e.g. a light scene emulating a sun rise in the east or a sun set in the west.

According to another aspect, there is provided a lighting system comprising a plurality of lighting devices having different dim level capabilities and the controller of any of the embodiments described in the present application communicatively coupled to the lighting devices and arranged to control the lighting devices. Such a lighting system benefits from the presence of the controller by being able to achieve deep dimming levels by the application of the spatial dimming techniques by the controller as explained above.

The lighting system may further comprise at least one of a user interface, one or more sensors and one or more cameras arranged to provide the controller with lighting device selection information including at least one of dim level capability information, environmental factor information, lighting device location information and light system spatial distribution information.

According to another aspect, there is provided a method of controlling a lighting system comprising a plurality of lighting devices having different dim level capabilities, comprising determining the dim level capability for each of said lighting devices; and creating a light scene having a defined dim level with the lighting system by selecting a subset of said lighting devices from the plurality of lighting devices based of the determined dim level capabilities; and controlling the respective dim levels of the selected subset of lighting devices. Such a spatial dimming method allows for the generation of light scenes characterized by deep dim levels beyond the capabilities of light systems in which all lighting devices are involved in the generation of such light scenes.

In an embodiment, determining the dim level capability of a lighting device comprises determining an intrinsic dim level capability of the lighting device; receiving a specification of environmental factors causing a discrepancy between the intrinsic dim level capability and a perceived dim level capability; and adjusting the intrinsic dim level capability of the lighting device based on the received specification of environmental factors to determine its dim level capability to further improve the accuracy of the spatial dimming technique as explained above.

The method may further comprise selecting said subset of lighting devices based on the respective positions of the lighting devices in a space housing the lighting system, for example to ensure a homogeneous light distribution of a light scene across an area to be illuminated or to ensure the generation of a light scene in a target area to be illuminated.

According to another aspect, there is provided a computer program product comprising a computer readable storage medium having computer readable program instructions embodied therewith for, when executed on a controller of a lighting system comprising a plurality of lighting devices having different dim level capabilities, cause the processor to implement the method of any of the embodiments described in this application. Such a computer program product for example may be used to upgrade existing controllers such that the existing controllers may employ spatial dimming techniques, by installing onto or otherwise providing the computer readable program instructions to the controller.

## BRIEF DESCRIPTION OF THE DRAWINGS

Embodiments of the invention are described in more detail and by way of non-limiting examples with reference to the accompanying drawings, wherein:

FIG. 1 schematically depicts a lighting system according to an embodiment;
FIG. 2 schematically depicts a lighting system according to an embodiment installed in a room;
FIG. 3 schematically depicts a lighting system according to another embodiment;
FIG. 4 depicts a flow chart of a lighting system control method according to an embodiment;
FIG. 5 depicts a flow chart of a lighting system control method according to another embodiment; and
FIG. 6 depicts a flow chart of a lighting system control method according to yet another embodiment.

## DETAILED DESCRIPTION OF THE EMBODIMENTS

It should be understood that the Figures are merely schematic and are not drawn to scale. It should also be understood that the same reference numerals are used throughout the Figures to indicate the same or similar parts.

In the context of the present application, where reference is made to the dim level capability of a lighting device, this is to be understood as the minimum amount of luminous output (e.g. in lumen) the lighting device is capable of producing. This may be expressed as an absolute value or as a fraction of the maximum amount of luminous output the lighting device is capable of producing. For example, a lighting device having 8 dim levels, may produce at its highest dim level, i.e. the level at which the amount of luminous output produced by the lighting device is most reduced, $1/8^{th}$ of its maximum amount of luminous output. As will be understood from the foregoing, a high dim level equates to a high reduction in the maximum luminous output capacity of a lighting device, i.e. a low intensity luminous output. This is also referred to as a deep dim level.

In the context of the present application, a light scene is a static or dynamic light effect, e.g. a co-ordinated luminous output to a particular dim level, a co-ordinated luminous output having a particular colour palette, a co-ordinated luminous output created in or directed at a particular part of a room in which a lighting system is installed, and so on. Many more examples of such a light scene will be immediately apparent to the skilled person.

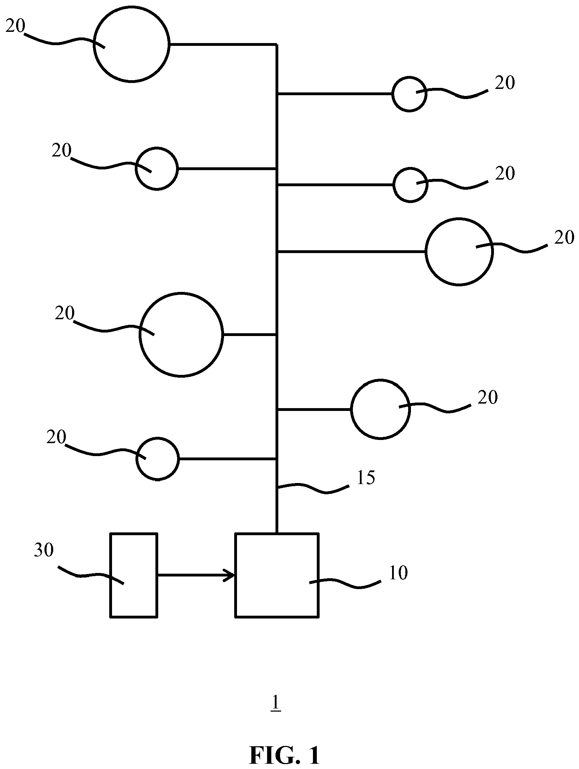

FIG. 1 schematically depicts a connected lighting system 1 according to an embodiment of the present invention.

Such a lighting system 1 may contain a variable number of lighting devices 20, which may be connected to a central controller 10 over a communication link 15. For example, the central controller 10 may form part of a bridge device or the like through which the respective lighting devices 20 may wirelessly connect over a wireless link 15. Any suitable wireless communication protocol, e.g. Wi-Fi, Bluetooth, a proprietary protocol, and so on, may be used for such a purpose. Alternatively, the respective lighting devices 20 may be connected to the central controller 10 using a wired link 15, which may be established in any suitable manner, e.g. over a power supply to which the respective lighting devices 20 are connected, for example by using Ethernet over power protocols or the like. In yet another embodiment, the respective lighting devices 20 may be connected to a dedicated wired network 15 through which the central controller 10 may control the respective lighting devices 20. As will be understood by the skilled person, in further embodiments the communication link 15 may be a hybrid link, i.e. link in which different lighting devices 20 are connected to the controller 10 in different manners, e.g. some of the lighting devices 20 may be connected in a wired fashion, whereas some other lighting devices 20 may be connected in a wireless fashion.

Such a connected lighting system 1 typically comprises different types of lighting devices 20, e.g. a mixture of different types of LED lighting devices, wall-mounted lighting devices, ceiling-mounted lighting devices, floor-mounted lighting devices, lighting devices integrated into furniture or electronic devices, and so on. Such a plurality of different lighting devices 20 typically means that different lighting devices 20 have different dim level capabilities. This is schematically depicted in FIG. 1 by the lighting devices 20 being represented by circles having different diameters, with a smaller circle indicating an ability of the lighting device 20 to be dimmed to a deeper level, i.e. having a higher dim level capability, compared to a lighting device 20 represented by a larger circle.

One of the attractions of such connected lighting systems 1 is the programmability of such systems, i.e. the ability to generate different light scenes with the lighting system 1 by controlling the respective lighting devices 20 in a co-ordinated manner with the central controller 10. As is well-known per se, a user may configure the lighting system 1 using a user interface 30, which may be a dedicated user interface forming a permanent part of the lighting system 1 or may be a smart device such as a mobile phone, tablet computer, laptop computer, personal computer, or the like onto which an app is installed to give the smart device the desired user interface functionality. In the latter scenario, the lighting system 1 may further comprise a wireless communication module (not shown) for wirelessly communicating with the smart device using any suitable wireless communication protocol, e.g. Wi-Fi, Bluetooth, a mobile communications standard such as 2G, 3G, 4G, 5G, etcetera, a proprietary communication protocol or any other suitable communication protocol that is well-known per se to the skilled person.

However, it may not be straightforward to generate certain types of light scenes with different types of lighting devices 20. Even though the controller 10 may have a basic understanding of the capabilities of the different lighting devices 20 in the lighting system 1, the controller 10 may not be capable to generate certain types of light scenes, in particular light scenes for which deep dim levels are required. For example, the controller 10 may try to create a light scene with a deep dim level by instructing all lighting devices 20 in the lighting system 1 to switch to their highest dim level (i.e. their lowest intensity luminous output) but this may not be sufficient to achieve the desired deep dim level of the chosen light scene due to the different dim level capabilities of the various lighting devices 20 in the lighting system 1.

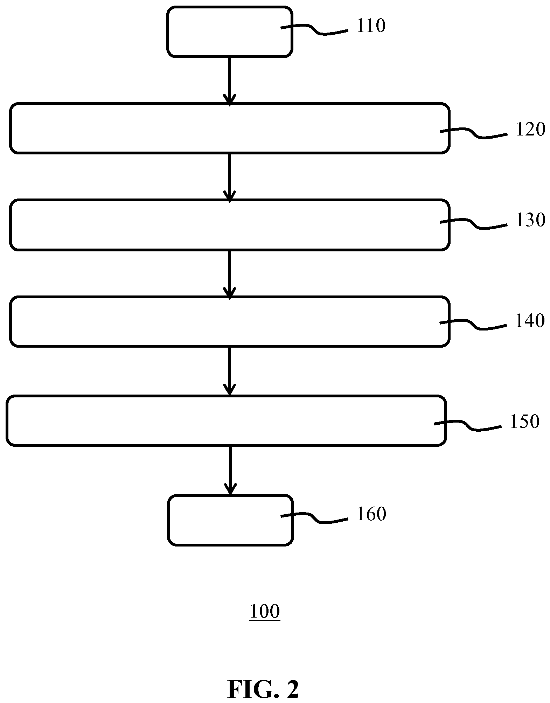

Embodiments of the present invention address this problem by the controller 10 being configured to implement the method 100 as depicted by the flow chart of FIG. 2, which starts in 110, e.g. by switching on the controller 10 before proceeding to 120 in which the controller 10 determines the dim level capability for each of said lighting devices 20. To this end, the controller 10 may communicate with each lighting device 20 in order to determine the dim level capability of said lighting device 20. This for example may be achieved by the lighting device 20 providing a dim level capability indicator to the controller 10 or by the lighting device 20 providing the controller 10 with a lighting device identifier, which identifier may be used by the controller 10 to look up the dim level capability of the lighting device 20 identified by the provided identifier in a data structure such as a lookup table, database or the like in which the respective dim level capabilities of a plurality of lighting devices identified by respective identifiers are listed. The controller 10 may comprise the data structure, e.g. in a data storage device such as a memory, or alternatively may access the data structure over a communication network such as the Internet, as is well-known per se.

Alternatively, the controller 10 may determine the dim level capability of a lighting device 20 from a light intensity measurement of the luminous output of the lighting device 20 at its highest dim level, e.g. during a calibration of the lighting system 1 by a user using a light meter or the like in a defined manner, e.g. at a defined distance from the lighting device 20, which light meter may be communicatively coupled to the controller 10 to provide the controller 10 with the measured luminous intensity of the luminous output of the lighting device 20, which the controller 10 may use to define the dim level capability of the lighting device 20. Alternatively, the user may provide the controller 20 with the measured luminous intensity of the lighting device 20, e.g. through the user interface 30 of the lighting system 1. In an embodiment, the controller 10 may be further adapted to create an ordered list of lighting devices 20 of the lighting system 1, in which the lighting devices 20 are ordered in accordance with the determined dim level capabilities of the lighting devices 20. For example, such an ordered list may be ordered in terms of decreasing dim level capabilities, i.e. with lighting devices 20 being capable of being dimmed to the deepest the dim levels being highest up in this ordered list.

The controller 10 may subsequently receive a user instruction in 130, which user instruction identifies a user-selected light scene having a defined dim level, e.g. a deep dim level, to be created with the lighting system 1. In response to this user instruction, the controller 10 selects in 140 a number of lighting devices 20, e.g. the first N lighting devices 20 from the aforementioned ordered list having a length M, in which M, N both are positive integers and M>N, to create a subset of the lighting devices 20 in the lighting system 1 to be used to create the user-specified light scene. As will be readily understood by the skilled person, the controller 10 may select the lighting devices 20 based on their determined dim level capabilities such that the combined luminous output of the selected lighting devices 20 operating a selected dim level, e.g. the highest dim level of each selected lighting device 20, creates the user-selected light scene at the appropriate, i.e. defined, dim level. Subsequently, the controller 10 controls the lighting devices 20 in the subset in 150 to generate the user-selected light scene with a subset, i.e. not all, of the lighting devices 20 in the lighting system 1, e.g. to accurately reproduce the desired deep dimming level associated with the user-selected light scene. The control method 100 implemented by the controller 10 may subsequently terminate in 160. As should be apparent to the skilled person, in the method 100, the dim level capability determining step 120 typically is only performed once for each lighting device 20 such that this step may be skipped if the controller 10 has previously determined the dimming level capability of each lighting device 20 in the lighting system 1.

The control method 100 in some embodiments may be refined by factoring in environmental factors in the determination of the dim level capabilities of the various lighting devices 20 of the lighting system 1. In the context of the present application, an environmental factor is a factor that causes a discrepancy between the intrinsic dim level capability of a lighting device 20 and its perceived dim level capability. For example, a lighting device 20 may be positioned in the vicinity of a reflective surface, a natural light source, etcetera, which may cause the luminous output of the lighting device 20 to be perceived as being brighter due to the reflected or natural light adding to the perceived brightness of the lighting device 20. As another example, the lighting device 20 may be partially obscured, may be covered by a lampshade or the like, or may be aimed away from an observer such that the dim level perceived by an observer of the lighting device 20 may be higher than the actual dim level produced with the lighting device 20. Other examples of such environmental factors will be immediately apparent to the skilled person.

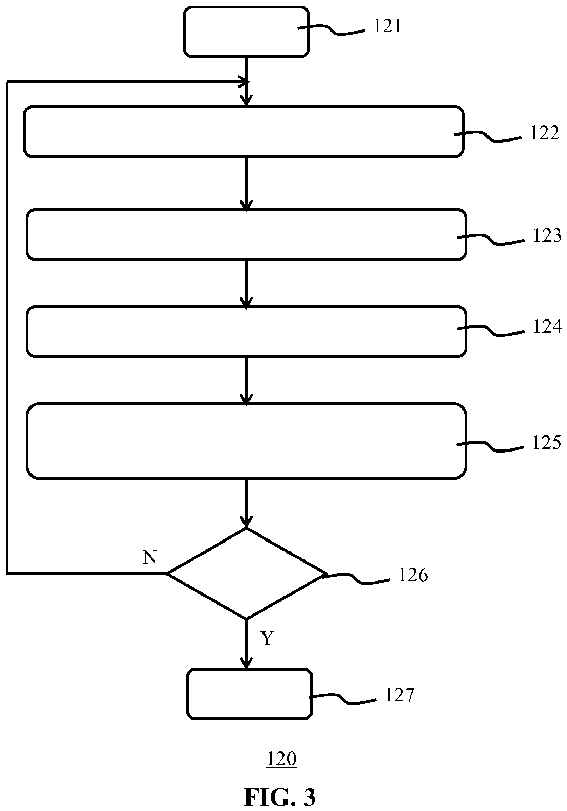

To compensate for such a discrepancy between the intrinsic dim level capability of a lighting device 20 and its perceived dim level capability, the controller 10 may implement a dim level capability determination method 120 as depicted by the flowchart in FIG. 3. The method 120 may start in 121, e.g. by the controller entering a dim level capability determination mode, before proceeding to 122 in which a lighting device 20 for which the perceived dim level capability is to be determined is selected. In 123, the controller 10 determines the intrinsic dim level capability of the selected lighting device 20, which may be achieved as explained above, e.g. by communication between the selected lighting device 20 and the controller 10.

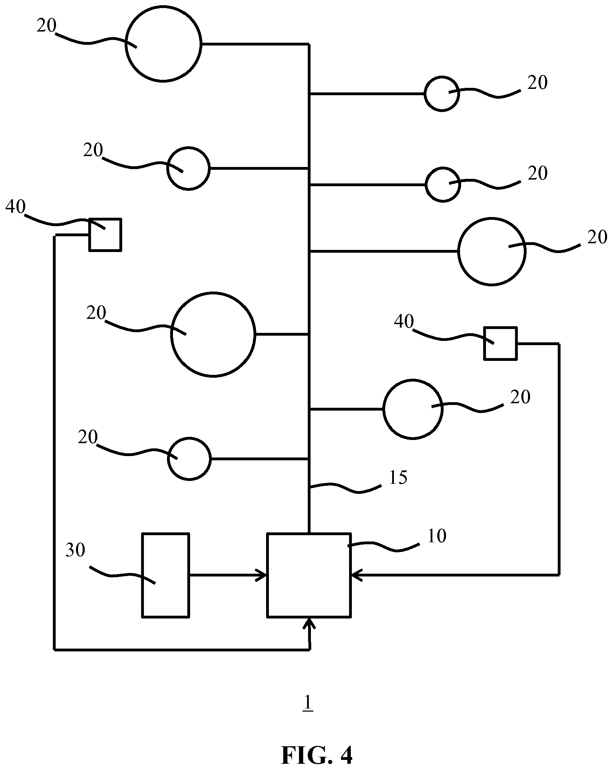

Next, the controller 10 determines the one or more environmental factors that cause a discrepancy between the intrinsic dim capability and the perceived dim capability of the selected lighting device 20. The controller 10 may be made aware of such environmental factors in any suitable manner. For example, information regarding such environmental factors may be entered into the lighting system 1, i.e. the controller 10, e.g. using a user interface 30, for each lighting device 20 during configuration of the lighting system 10. For example, a user's smart device operable as a user interface 30 may be used to acquire such information using the smart device's camera either during a configuration session of the lighting system 1 or at the moment creation of the light scene having a desired dimming or fading effect is desired. Alternatively, the environmental factors may be sensed either by one or more sensors embedded in a lighting device 20 and communicatively coupled to the controller 10 or by cameras 40 communicatively coupled to the controller 10 and present in the room in which the lighting system 1 is installed, as schematically depicted in FIG. 4.

Upon determining the environmental factors in 124, the controller 10 in 125 adjusts the intrinsic dim level capability of the selected lighting device 20 based on the determined environmental factors to determine the actual (perceived) dim level capability of the selected lighting device 20 to be used in the creation of light scenes with the lighting system 1 as explained above. This may be repeated for each lighting device 20 as indicated by 126 until all lighting devices 20 affected by such environmental factors have been considered, after which this embodiment of the dim level capability determination method 120 may terminate in 127.

At this point, it is noted that in an alternative embodiment, the perceived dim level capability of a lighting device 20 may be directly determined using a sensor, camera or light meter as previously explained, in which case the controller 10 may not need to be aware of the environmental factors affecting the perceived dim level capability of the lighting device 20.

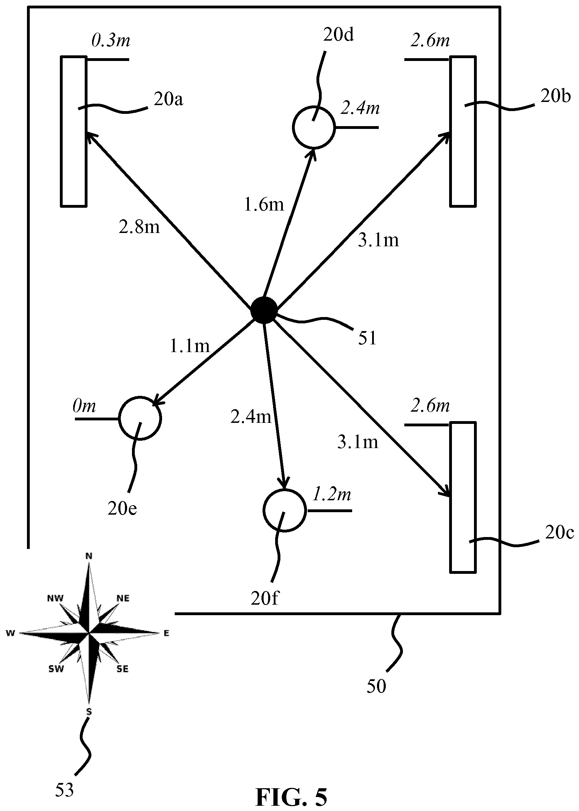

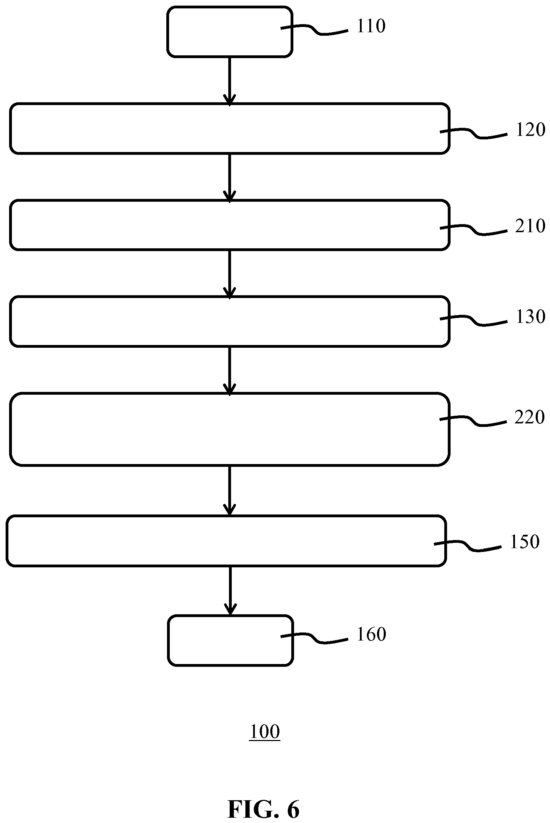

The controller 10 is adapted to create the aforementioned subset of lighting devices 20 based on the dim level capabilities of the lighting devices 20 as well as based on positional information regarding the lighting devices 20. This will be explained with the aid of FIG. 5, which schematically depicts six lighting devices 20a-f of a lighting system 1 installed in different relative positions and at different heights within a room 50 by way of non-limiting example. It will be understood that any number of lighting devices 20 may be present within such a room 50 For each lighting device, a distance from the centre 51 of the room 50 is indicated by the arrow from this centre to the lighting device whereas the height at which each lighting device 20a-f is installed in the room relative to the floor of the room is indicated in italic. The controller 10 may be adapted to implement an embodiment of the control method 100 as depicted by the flow chart in FIG. 6, in which steps numbered identically to the steps in the method 100 as depicted in FIG. 2 and described above are identical to these earlier described steps, such that these steps will not be described again for the sake of brevity only.

In 210, the controller 10 determines the positional information of each of the lighting devices 20a-f in the lighting system 1. The positional information for each of the lighting devices 20a-f may be made available to the controller 10 in any suitable manner, e.g. by the user specifying this positional information through the user interface 30 or by positioning sensors are integral to the lighting devices 20a-f. Other suitable ways of providing such positional information will be immediately apparent to the skilled person. The controller 10 may utilise this positional information to further refine the way in which the respective lighting devices 20a-f are selected and/or ordered in the subset. For example, the controller 10 may give preference to a lighting device 20 installed at a greater height in the room 50 or closer to the centre of the room 50 when ordering the lighting devices 20 in the subset as a lighting device at a greater height or closer to the centre of the room 50 will provide a greater contribution to the perceived lighting scene compared to a lighting device 20 installed at a lower height or in the periphery of the room 50. Upon a user instructing the controller 10 to generate a particular light scene with the lighting system 1 in 130, the controller generates the subset of lighting devices from the pool of lighting devices 20a-f based on the dim level capabilities and the positional information of each of the lighting devices 20a-f. For example, the controller 10 may determine a parameter Dim_Value for each lighting device 20 in accordance with the following example algorithm:

$$Dim\_Value = \left\{ \frac{1}{lm} * lm_{\min} \right\} * \left\{ 1 - \frac{1}{n} \left( \frac{h}{h_{\max}} \right) \right\} * \left\{ 1 - \frac{1}{m} \left( \frac{d_{\max} - d}{d_{\max}} \right) \right\}$$

In this algorithm, lm is the minimum lumen output, i.e. the dim level capability, of a specific lighting device 20 and $lm_{\min}$ is the minimum lumen output across all lighting devices 20a-f (e.g. in a room 50). h is the installation height of the lighting device 20 and $h_{\max}$ is the maximum installation height for a specific lighting device 20 (e.g. the room height), d is the distance to the target location 51, e.g. the centre of the room 50, and $d_{\max}$ is the maximum distance to the target location in meters. Variables n and m are specific fractions that determine the contribution of the height and distance to the centre as part of the overall dim value. These fractions may be defined as part of a predefined light scene or alternatively may be user-defined, e.g. by a user defining a particular light scene. The controller 10 may order the lighting devices 20a-f in descending Dim Value order such that the lighting devices having the highest dim value are highest in the ordered list defining the subset or from which the subset may be defined. The thus created subset of lighting devices 20 may be used by the controller 10 to create the light scene in 150 as previously explained prior to termination of the control method 100 in 160.

It should be understood that the above algorithm is an example algorithm only and that many other suitable algorithms in which dim level capability as well as positional information of the lighting devices 20 in a lighting system 1 may be deployed by the controller 10. For example, the positional information may further include distance information specifying the distance between individual lighting devices 20 in their respective relative positions within the room 50, which distance information may also be taken into account and weighted as part of calculating the dim value for the lighting devices 20. This for example may be used to ensure that the perceived brightness in the room 50 is more uniformly distributed, e.g. not all lighting devices 20 on one side of the room 50 are turned on, while lighting devices 20 at the other side of the room 50 remain turned off.

In the foregoing, the target location 51 is a fixed location within the room 50. However, it should be understood that the target location 51 itself may be variable, e.g. a user location within the room 50, in which case the target location 51 may be determined using any suitable detection technique, e.g. positioning information provided by a user device carried or worn by the user, a presence detection sensor arrangement, and so on. In this manner, by relating the respective positions of the lighting devices 20 to such a variable target location 51, light scenes may be generated in which the dimming effects are spatially related to the determined target location 51, e.g. to provide a user with an optimal perception of the generated light scene.

In an embodiment, the relative positional information for each lighting device 20 as obtained by the controller 10 may further comprise positional information specifying the position of the lighting device 20 relative to the magnetic north or the North Pole as schematically depicted by compass rose 53 in FIG. 5. Such information for example may be specified by a user using a user interface 30 as previously explained or by a connected positioning system, e.g. a GPS system having knowledge of the orientation of the room 50 relative to such geographical reference points, such that the relative position of the lighting devices 20 within the room 50 may be associated with the determined room orientation. In this manner, the controller 10 may select lighting devices 20 in the subset that are in a particular cardinal direction, e.g. lighting devices 20 in the East or West, for example to implement a light scene emulating a sunrise or sunset respectively.

In an embodiment, the controller 10 may be adapted to generate a dynamic light scene, e.g. a light scene in which the subset of lighting devices 20 are dimmed, e.g. are switched on to a defined dim level and/or of which the dim level is adjusted in a controlled manner over a defined period of time, in a temporal order, such as in accordance with an ordered subset as previously explained. For example, the order list of lighting devices 20, e.g. ordered in accordance with the variable Dim_Value may be used to determine the sequence of switching on (in case of dimming up) or off (in case of dimming down) the lighting devices 20. For instance, for a gentle wake up experience first the first lighting device 20 in the ordered list may be turned on at its deepest dim level, followed by the second lighting device 20 in the ordered list and so on. In this manner, all lighting devices 20 in the subset are gradually dimmed up until the desired brightness is achieved. In a more advanced embodiment, the relative difference in Dim_ Value may be taken into account to determine the timing of the light control commands generated by the controller 10 for each individual lighting device 20 to ensure a smooth (e.g. perceptually linear) dimming behaviour of the light scene, e.g. the delay applied to the next lighting device 20 in the ordered list to be switched on may scale with the difference between the difference in the Dim Value between the previous lighting device 20 to be switched on and this next lighting device 20 to be switched on.

In the foregoing, a lighting system 1 has been described that has been installed within a room 50, i.e. an indoor lighting system 1. However, it should be understood that this is by way of non-limiting example only and that the teachings of at least some embodiments of the present invention are equally applicable to outdoor lighting systems.

The present invention may be embodied by a controller, a lighting system comprising such a controller, a controller-implemented method, and/or a computer program product to be executed by such a controller at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the lighting system controller, partly on the user's lighting system controller, as a stand-alone software package, partly on the lighting system controller and partly on a remote computer or entirely on the remote computer or server. In the latter scenario, the remote computer may be connected to the lighting system controller through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention. The lighting system controller may be a separate entity or may be at least partially integrated in one of the lighting devices, e.g. a lighting device having sufficient processing capabilities.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor arrangement of a lighting system controller to produce a machine, such that the instructions create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

**Claims**

1. A controller (10) for a lighting system (1) including a plurality of lighting devices (20) having different dim level capabilities, the controller configured to:

   determine the dim level capability for each of the plurality of lighting devices, wherein the dim level capability of a lighting device relates to a minimum amount of luminous output that the lighting device is capable of producing;
   determine positions of each of the plurality of lighting devices in the lighting system, each respective position comprising a respective distance of the respective lighting device relative to a target location (51) in a space (50) housing the lighting system (1); and
   create a light scene with the lighting system having a defined dim level, the defined dim level having a luminous output lower than a combined minimum luminous output of the plurality of lighting devices, **characterised by**:

      selecting a subset of lighting devices from the plurality of lighting devices based on the determined dim level capabilities of the plurality of lighting devices and based on the respective distances of the lighting devices relative to said target location (51), and
      controlling the luminous output of the subset of lighting devices such that a combined luminous output of the subset of lighting devices has the defined dim level.

2. The controller (10) of claim 1, wherein the controller is configured to determine the dim level capability of a lighting device (20) from an identifier of the lighting device or from a dim level capability indicator provided by the lighting device.

3. The controller (10) of claim 1, wherein the controller is configured to determine the dim level capability for a lighting device (20) from a light intensity measurement of a luminous output of the lighting device at its highest dim level.

4. The controller (10) of any of claims 1-3, wherein the controller is further configured to receive a specification of environmental factors causing a discrepancy between the intrinsic dim level capability and a perceived dim level capability of a lighting device (20), and to determine the dim level capability of the lighting device (20) by adjusting an intrinsic dim level capability of the lighting device based on the received specification of the environmental factors.

5. The controller (10) of claim 1, wherein the controller is configured to select said subset of lighting devices (20) based on at least one of:

   height of the lighting devices in the lighting system (1) relative to a surface on which the light scene is projected; and
   relative location of the lighting devices in said space (50).

6. The controller (10) of claim 1 or 5, wherein the controller is further configured to select said subset of lighting devices (20) based on the respective positions of the lighting devices in said space (50) such that a homogeneously distributed lumen level is achieved across the space.

7. The controller (10) of any of claims 1, 5 or 6, wherein the light scene is a dynamic light scene, and the controller is adapted to order the lighting devices (20) in the subset in a temporal order for creating the dynamic light scene.

8. The controller (10) of any of claims 1, 5, 6 or 7, wherein the controller is configured to determine a spatial distribution of the lighting devices (20) in the lighting system (1) relative to the magnetic north or the North Pole, and to select the lighting devices in said subset based on the determined spatial distribution.

9. A lighting system (1) comprising a plurality of lighting devices (20) having different dim level capabilities and the controller (10) of any of claim 1-8 communicatively coupled to the lighting devices and arranged to control the lighting devices.

10. The lighting system (1) of claim 9, further comprising at least one of a user interface, one or more sensors (40) and one or more cameras arranged to provide the controller (20) with lighting device selection information including at least one of dim level capability information, environmental factor information, lighting device location information and light system spatial distribution information.

11. A method (100) of controlling a lighting system (1) comprising a plurality of lighting devices (20) having different dim level capabilities, comprising:

   determining (120) the dim level capability for each of the plurality of lighting devices, wherein the dim level capability of a lighting device relates to a minimum amount of luminous output that the lighting device is capable of producing;
   determining positions of each of the plurality of lighting devices in the lighting system, each respective position comprising a respective distance of the respective lighting device relative to a target location (51) in a space (50) housing the lighting system (1); and
   creating a light scene with the lighting system having a defined dim level, the defined dim level having a luminous output lower than a combined minimum luminous output of the plurality of lighting devices, **characterised by**:
   selecting (130) a subset of lighting devices from the plurality of lighting devices based on the determined dim level capabilities of the plurality of lighting devices and based on the respective distances of the lighting devices relative to said target location (51); and
   controlling (140) the luminous output of the selected subset of lighting devices such that a combined luminous output of the subset of lighting devices has the defined dim level.

12. The method (100) of claim 11, wherein determining (120) the dim level capability of a lighting device (20) comprises:

   determining (123) an intrinsic dim level capability of the lighting device;
   receiving (124) a specification of environmental factors causing a discrepancy between the intrinsic dim level capability and a perceived dim level capability; and

adjusting (125) the intrinsic dim level capability of the lighting device based on the received specification of environmental factors to determine its dim level capability.

13. A computer program product comprising a computer readable storage medium having computer readable program instructions embodied therewith which, when executed on a controller (20) of a lighting system (1) comprising a plurality of lighting devices (20) having different dim level capabilities, cause the processor to implement the method (100) of any of claims 11-12.

**Patentansprüche**

1. Steuerung (10) für ein Beleuchtungssystem (1), das eine Vielzahl von Beleuchtungsvorrichtungen (20) mit unterschiedlichen Dimmstufenfähigkeiten einschließt, wobei die Steuerung dazu ausgebildet ist:

für jede aus der Vielzahl von Beleuchtungsvorrichtungen die Dimmstufenfähigkeit zu bestimmen, wobei sich die Dimmstufenfähigkeit einer Beleuchtungsvorrichtung auf eine Mindestmenge an Lichtleistung bezieht, die die Beleuchtungsvorrichtung produzieren kann;

Positionen von jeder aus der Vielzahl von Beleuchtungsvorrichtungen im Beleuchtungssystem zu bestimmen, wobei jede jeweilige Position einen jeweiligen Abstand der jeweiligen Beleuchtungsvorrichtung in Bezug auf einen Zielort (51) in einem Raum (50) umfasst, der das Beleuchtungssystem (1) beherbergt; und

eine Lichtszene zu erzeugen, bei der das Beleuchtungssystem eine definierte Dimmstufe aufweist, wobei die definierte Dimmstufe eine Lichtleistung aufweist, die niedriger ist als eine kombinierte minimale Lichtleistung der Vielzahl von Beleuchtungsvorrichtungen, **gekennzeichnet durch**:

Auswählen einer Teilmenge von Beleuchtungsvorrichtungen aus der Vielzahl von Beleuchtungsvorrichtungen auf Basis der bestimmten Dimmstufenfähigkeiten der Vielzahl von Beleuchtungsvorrichtungen und auf Basis der jeweiligen Abstände der Beleuchtungsvorrichtungen in Bezug auf den Zielort (51), und

Steuern der Lichtleistung der Teilmenge von Beleuchtungsvorrichtungen derart, dass eine kombinierte Lichtleistung der Teilmenge von Beleuchtungsvorrichtungen die definierte Dimmstufe aufweist.

2. Steuerung (10) nach Anspruch 1, wobei die Steuerung dazu ausgebildet ist, die Dimmstufenfähigkeit einer Beleuchtungsvorrichtung (20) anhand einer Kennung der Beleuchtungsvorrichtung oder anhand eines Dimmstufenfähigkeits-Indikators, der von der Beleuchtungsvorrichtung bereitgestellt wird, zu bestimmen.

3. Steuerung (10) nach Anspruch 1, wobei die Steuerung dazu ausgebildet ist, die Dimmstufenfähigkeit für eine Beleuchtungsvorrichtung (20) anhand einer Lichtintensitätsmessung einer Lichtleistung der Beleuchtungsvorrichtung auf deren höchster Dimmstufe zu bestimmen.

4. Steuerung (10) nach einem der Ansprüche 1-3, wobei die Steuerung weiter dazu ausgebildet ist, eine Spezifikation von Umweltfaktoren zu empfangen, die eine Diskrepanz zwischen der intrinsischen Dimmstufenfähigkeit und einer wahrgenommenen Dimmstufenfähigkeit einer Beleuchtungsvorrichtung (20) verursachen, und die Dimmstufenfähigkeit der Beleuchtungsvorrichtung (20) durch Anpassen einer intrinsischen Dimmstufenfähigkeit der Beleuchtungsvorrichtung auf Basis der empfangenen Spezifikation der Umweltfaktoren zu bestimmen.

5. Steuerung (10) nach Anspruch 1, wobei die Steuerung dazu ausgebildet ist, die Teilmenge von Beleuchtungsvorrichtungen (20) auf Basis von mindestens einem auszuwählen aus:

Höhe der Beleuchtungsvorrichtungen im Beleuchtungssystem (1) in Bezug auf eine Fläche, auf die die Lichtszene projiziert wird; und

relativem Standort der Beleuchtungsvorrichtungen im Raum (50).

6. Steuerung (10) nach Anspruch 1 oder 5, wobei die Steuerung weiter dazu ausgebildet ist, die Teilmenge von Beleuchtungsvorrichtungen (20) auf Basis der jeweiligen Positionen der Beleuchtungsvorrichtungen im Raum (50) derart auszuwählen, dass über den Raum hinweg ein homogen verteiltes Lumenniveau erreicht wird.

7. Steuerung (10) nach einem der Ansprüche 1, 5 oder 6, wobei es sich bei der Lichtszene um eine dynamische Lichtszene handelt, und die Steuerung dazu geeignet ist, die Beleuchtungsvorrichtungen (20) in der Teilmenge in einer zeitlichen Reihenfolge zu ordnen, um die dynamische Lichtszene zu erzeugen.

8. Steuerung (10) nach einem der Ansprüche 1, 5, 6 oder 7, wobei die Steuerung dazu ausgebildet ist, eine räumliche Verteilung der Beleuchtungsvorrichtungen (20) im Beleuchtungssystem (1) in Bezug auf den magnetischen Norden oder den Nordpol zu bestimmen, und die Beleuchtungsvorrichtungen in der Teilmenge auf Basis der bestimmten räumlichen Verteilung auszuwählen.

9. Beleuchtungssystem (1), das eine Vielzahl von Beleuchtungsvorrichtungen (20) mit unterschiedlichen Dimmstufenfähigkeiten und die Steuerung (10) nach einem aus Anspruch 1-8 umfasst, die kommunikationsmäßig mit den Beleuchtungsvorrichtungen gekoppelt und dazu eingerichtet ist, die Beleuchtungsvorrichtungen zu steuern.

10. Beleuchtungssystem (1) nach Anspruch 9, weiter mindestens eines aus einer Benutzerschnittstelle, einem oder mehreren Sensoren (40) und einer oder mehreren Kameras umfassend, die dazu eingerichtet sind, die Steuerung (20) mit Beleuchtungsvorrichtungs-Auswahlinformationen zu versorgen, welche mindestens eines aus Dimmstufenfähigkeitsinformationen, Umweltfaktorinformationen, Beleuchtungsvorrichtungs-Standortinformationen und Informationen zur räumlichen Verteilung des Lichtsystems einschließen.

11. Verfahren (100), um ein Beleuchtungssystem (1) zu steuern, das eine Vielzahl von Beleuchtungsvorrichtungen (20) mit unterschiedlichen Dimmstufenfähigkeiten umfasst, umfassend:

Bestimmen (120) der Dimmstufenfähigkeit für jede aus der Vielzahl von Beleuchtungsvorrichtungen, wobei sich die Dimmstufenfähigkeit einer Beleuchtungsvorrichtung auf eine Mindestmenge an Lichtleistung bezieht, die die Beleuchtungsvorrichtung produzieren kann;
Bestimmen von Positionen von jeder aus der Vielzahl von Beleuchtungsvorrichtungen im Beleuchtungssystem, wobei jede jeweilige Position einen jeweiligen Abstand der jeweiligen Beleuchtungsvorrichtung in Bezug auf einen Zielort (51) in einem Raum (50) umfasst, der das Beleuchtungssystem (1) beherbergt; und
Erzeugen einer Lichtszene, bei der das Beleuchtungssystem eine definierte Dimmstufe aufweist, wobei die definierte Dimmstufe eine Lichtleistung aufweist, die niedriger ist als eine kombinierte minimale Lichtleistung der Vielzahl von Beleuchtungsvorrichtungen, **gekennzeichnet durch**:

Auswählen (130) einer Teilmenge von Beleuchtungsvorrichtungen aus der Vielzahl von Beleuchtungsvorrichtungen auf Basis der bestimmten Dimmstufenfähigkeiten der Vielzahl von Beleuchtungsvorrichtungen und auf Basis der jeweiligen Abstände der Beleuchtungsvorrichtungen in Bezug auf den Zielort (51); und
Steuern (140) der Lichtleistung der ausgewählten Teilmenge von Beleuchtungsvorrichtungen derart, dass eine kombinierte Lichtleistung der Teilmenge von Beleuchtungsvorrichtungen die definierte Dimmstufe aufweist.

12. Verfahren (100) nach Anspruch 11, wobei das Bestimmen (120) der Dimmstufenfähigkeit einer Beleuchtungsvorrichtung (20) umfasst:

Bestimmen (123) einer intrinsischen Dimmstufenfähigkeit der Beleuchtungsvorrichtung;
Empfangen (124) einer Spezifikation von Umweltfaktoren, die eine Diskrepanz zwischen der intrinsischen Dimmstufenfähigkeit und einer wahrgenommenen Dimmstufenfähigkeit verursachen; und
Anpassen (125) der intrinsischen Dimmstufenfähigkeit der Beleuchtungsvorrichtung auf Basis der empfangenen Spezifikation von Umweltfaktoren, um ihre Dimmstufenfähigkeit zu bestimmen.

13. Computerprogrammprodukt, das ein computerlesbares Speichermedium mit darauf ausgeführten, computerlesbaren Programmanweisungen umfasst, die, wenn sie auf einer Steuerung (20) eines Beleuchtungssystems (1) ausgeführt werden, welches eine Vielzahl von Beleuchtungsvorrichtungen (20) mit unterschiedlichen Dimmstufenfähigkeiten umfasst, den Prozessor dazu bringen, das Verfahren (100) nach einem der Ansprüche 11-12 umzusetzen.

**Revendications**

1. Dispositif de commande (10) pour un système d'éclairage (1) incluant une pluralité de dispositifs d'éclairage (20) ayant des capacités différentes de niveau de gradation de l'intensité lumineuse, le dispositif de commande étant configuré :

pour déterminer la capacité de niveau de gradation de l'intensité lumineuse pour chaque dispositif d'éclairage de la pluralité de dispositifs d'éclairage, dans lequel la capacité de niveau de gradation de l'intensité lumineuse d'un dispositif d'éclairage se rapporte à une quantité minimale de sortie lumineuse que le dispositif d'éclairage peut produire ;

pour déterminer les positions de chaque dispositif d'éclairage de la pluralité de dispositifs d'éclairage dans le système d'éclairage, chaque position respective comprenant une distance respective du dispositif d'éclairage respectif par rapport à un emplacement cible (51) dans un espace (50) recevant le système d'éclairage (1) ; et pour créer une scène lumineuse avec le système d'éclairage ayant un niveau défini de gradation de l'intensité lumineuse, le niveau défini de gradation de l'intensité lumineuse ayant une sortie lumineuse plus faible qu'une sortie lumineuse minimale combinée de la pluralité de dispositifs d'éclairage, **caractérisé par** :

la sélection d'un sous-ensemble de dispositifs d'éclairage parmi la pluralité de dispositifs d'éclairage sur la base des capacités de niveau de gradation de l'intensité lumineuse déterminées de la pluralité de dispositifs d'éclairage et sur la base des distances respectives des dispositifs d'éclairage par rapport au dit emplacement cible (51) et

la commande de la sortie lumineuse du sous-ensemble de dispositifs d'éclairage de telle sorte qu'une sortie lumineuse combinée du sous-ensemble de dispositifs d'éclairage présente le niveau défini de gradation de l'intensité lumineuse.

2. Dispositif de commande (10) selon la revendication 1, dans lequel le dispositif de commande est configuré pour déterminer la capacité de niveau de gradation de l'intensité lumineuse d'un dispositif d'éclairage (20) à partir d'un identifiant du dispositif d'éclairage ou à partir d'un indicateur de capacité de niveau de gradation de l'intensité lumineuse fourni par le dispositif d'éclairage.

3. Dispositif de commande (10) selon la revendication 1, dans lequel le dispositif de commande est configuré pour déterminer la capacité de niveau de gradation de l'intensité lumineuse pour un dispositif d'éclairage (20) à partir d'une mesure d'intensité lumineuse d'une sortie lumineuse du dispositif d'éclairage à son niveau de gradation de l'intensité lumineuse le plus élevé.

4. Dispositif de commande (10) selon l'une quelconque des revendications 1 à 3, dans lequel le dispositif de commande est en outre configuré pour recevoir une spécification de facteurs environnementaux provoquant une divergence entre la capacité intrinsèque de niveau de gradation de l'intensité lumineuse et une capacité de niveau de gradation de l'intensité lumineuse perçue d'un dispositif d'éclairage (20) et pour déterminer la capacité de niveau de gradation de l'intensité lumineuse du dispositif d'éclairage (20) en ajustant une capacité intrinsèque de niveau de gradation de l'intensité lumineuse du dispositif d'éclairage sur la base de la spécification reçue des facteurs environnementaux.

5. Dispositif de commande (10) selon la revendication 1, dans lequel le dispositif de commande est configuré pour sélectionner ledit sous-ensemble de dispositifs d'éclairage (20) sur la base d'au moins l'un :

d'une hauteur des dispositifs d'éclairage dans le système d'éclairage (1) par rapport à une surface sur laquelle la scène lumineuse est projetée ;
d'un emplacement relatif des dispositifs d'éclairage dans ledit espace (50).

6. Dispositif de commande (10) selon la revendication 1 ou 5, dans lequel le dispositif de commande est en outre configuré pour sélectionner ledit sous-ensemble de dispositifs d'éclairage (20) sur la base des positions respectives des dispositifs d'éclairage dans ledit espace (50) de telle sorte qu'un niveau de lumen réparti de manière homogène soit obtenu à travers l'espace.

7. Dispositif de commande (10) selon l'une quelconque des revendications 1, 5 ou 6, dans lequel la scène lumineuse est une scène lumineuse dynamique et le dispositif de commande est conçu pour ordonner les dispositifs d'éclairage (20) dans le sous-ensemble dans un ordre temporel pour créer la scène lumineuse dynamique.

8. Dispositif de commande (10) selon l'une quelconque des revendications 1, 5, 6 ou 7, dans lequel le dispositif de commande est configuré pour déterminer une distribution spatiale des dispositifs d'éclairage (20) dans le système d'éclairage (1) par rapport au nord magnétique ou au pôle nord et pour sélectionner les dispositifs d'éclairage dans ledit sous-ensemble sur la base de la distribution spatiale déterminée.

9. Système d'éclairage (1) comprenant une pluralité de dispositifs d'éclairage (20) ayant des capacités différentes de niveau de gradation de l'intensité lumineuse et le dispositif de commande (10) selon l'une quelconque des revendications 1 à 8 couplé en communication aux dispositifs d'éclairage et agencé pour commander les dispositifs d'éclairage.

10. Système d'éclairage (1) selon la revendication 9, comprenant en outre au moins l'un d'une interface utilisateur, d'un ou de plusieurs capteurs (40) et d'une ou de plusieurs caméras agencées pour fournir au dispositif de commande (20) des informations de sélection de dispositif d'éclairage incluant au moins l'une des informations de capacité de niveau de gradation de l'intensité lumineuse, des informations de facteurs environnementaux, des informations d'emplacement de dispositif d'éclairage et des informations de distribution spatiale de système d'éclairage.

11. Procédé (100) de commande (10) d'un système d'éclairage (1) comprenant une pluralité de dispositifs d'éclairage (20) ayant des capacités différentes de niveau de gradation de l'intensité lumineuse, comprenant :

la détermination (120) de la capacité de niveau de gradation de l'intensité lumineuse pour chaque dispositif d'éclairage de la pluralité de dispositifs d'éclairage, dans lequel la capacité de niveau de gradation de l'intensité lumineuse d'un dispositif d'éclairage se rapporte à une quantité minimale de sortie lumineuse que le dispositif d'éclairage peut produire ;

la détermination des positions de chaque dispositif d'éclairage de la pluralité de dispositifs d'éclairage dans le système d'éclairage, chaque position respective comprenant une distance respective du dispositif d'éclairage respectif par rapport à un emplacement cible (51) dans un espace (50) recevant le système d'éclairage (1) ; et

la création d'une scène lumineuse avec le système d'éclairage ayant un niveau défini de gradation de l'intensité lumineuse, le niveau défini de gradation de l'intensité lumineuse ayant une sortie lumineuse plus faible qu'une sortie lumineuse minimale combinée de la pluralité de dispositifs d'éclairage, **caractérisé par** :

la sélection (130) d'un sous-ensemble de dispositifs d'éclairage parmi la pluralité de dispositifs d'éclairage sur la base des capacités de niveau de gradation de l'intensité lumineuse déterminées de la pluralité de dispositifs d'éclairage et sur la base des distances respectives des dispositifs d'éclairage par rapport au dit emplacement cible (51) ; et

la commande (140) de la sortie lumineuse du sous-ensemble sélectionné de dispositifs d'éclairage de telle sorte qu'une sortie lumineuse combinée du sous-ensemble de dispositifs d'éclairage présente le niveau défini de gradation de l'intensité lumineuse.

12. Procédé (100) selon la revendication 11, dans lequel la détermination (120) de la capacité de niveau de gradation de l'intensité lumineuse d'un dispositif d'éclairage (20) comprend :

la détermination (123) d'une capacité intrinsèque de niveau de gradation de l'intensité lumineuse du dispositif d'éclairage ;

la réception (124) d'une spécification de facteurs environnementaux provoquant une divergence entre la capacité intrinsèque de niveau de gradation de l'intensité lumineuse et une capacité de niveau de gradation de l'intensité lumineuse perçue ; et

l'ajustement (125) de la capacité intrinsèque de niveau de gradation de l'intensité lumineuse du dispositif d'éclairage sur la base de la spécification reçue de facteurs environnementaux pour déterminer sa capacité de niveau de gradation de l'intensité lumineuse.

13. Produit-programme d'ordinateur comprenant un support de stockage lisible par ordinateur sur lequel sont intégrées des instructions de programme lisibles par ordinateur qui, lorsqu'elles sont exécutées sur un dispositif de commande (20) d'un système d'éclairage (1) comprenant une pluralité de dispositifs d'éclairage (20) ayant des capacités différentes de niveau de gradation de l'intensité lumineuse, amènent le processeur à mettre en œuvre le procédé (100) selon l'une quelconque des revendications 11 à 12.

1

**FIG. 1**

110

120

130

140

150

160

100

**FIG. 2**

121

122

123

124

125

N 126

Y

127

120

**FIG. 3**

FIG. 4

*0.3m*

20d

*2.6m*

20a

*2.4m*

20b

2.8m

1.6m

3.1m

51

1.1m

*0m*

*2.6m*

2.4m

3.1m

20e

*1.2m*

20c

20f

50

53

**FIG. 5**

100

**FIG. 6**

**EP 3 479 654 B1**

### Patent documents cited in the description

- US 20150084545 A1
- US 20140015445 A1
- WO 2016019005 A1